Europäisches Patentamt

**European Patent Office**

Office européen des brevets

(11) Publication number : **0 387 990 B1**

(12) **EUROPEAN PATENT SPECIFICATION**

(45) Date of publication of patent specification :
13.09.95 Bulletin 95/37

(51) Int. Cl.⁶ : **H04B 10/155, H01S 3/133**

(21) Application number : **90301205.2**

(22) Date of filing : **06.02.90**

(54) **Method and apparatus for enhancing the enable response of a laser diode used in an optical communication system.**

(30) Priority : **06.02.89 JP 27331/89**
**28.06.89 US 373084**

(43) Date of publication of application :
**19.09.90 Bulletin 90/38**

(45) Publication of the grant of the patent :
**13.09.95 Bulletin 95/37**

(84) Designated Contracting States :
**AT BE CH DE DK ES FR GB GR IT LI LU NL SE**

(56) References cited :
**EP-A- 0 314 390**
**DE-A- 3 434 217**
**DE-A- 3 705 697**
**DE-A- 3 705 698**

(73) Proprietor : **DIGITAL EQUIPMENT**
**CORPORATION**
**111 Powdermill Road**
**Maynard Massachusetts 01754-1418 (US)**

(72) Inventor : **Nakayama, Takao c/o R.D. Center**
**Dig. Equipm. Corp.**
**134 Goudo-cho**
**Hodogaya-ku**
**Yokohama (JP)**

(74) Representative : **Maggs, Michael Norman et al**
**Kilburn & Strode**
**30 John Street**
**London WC1N 2DD (GB)**

## Description

This invention relates generally to a method and apparatus for enhancing the enable response time of a laser diode used in an optical transmitter of an optical communication system or an optical interconnect and, more particularly, to a method and apparatus for controlling the response time of a closed loop automatic power control during the initial portion of the enable time period of a laser diode.

Laser diodes are commonly used in optical communication systems for high-speed data transmission. To sustain high-speed communication in optical local area networks or optical interconnections in computer systems, a good response to data burst signals is sometimes required of the optical transmitter.

However, while it is ordinarily true that a laser diode is operated between relatively high and low optical output intensity, it is never completely shut "off." That is, the bias current of the laser diode is never turned "off." Thus, the laser diode is typically in a low optical output state, which corresponds to the supplied bias current, when a data burst arrives. Therefore, there is no initial enablization delay. That is to say, the laser diode is initially at a low optical output intensity, rather than at zero optical output intensity.

On the other hand, in some applications, for example, in passively star-coupled interconnections, in which many optical transmitters and receivers carry out multiple access, complete shut down of the transmitter's optical output is required. In the case of passively star-coupled interconnections, the residual light of multiple transmitters accumulates and significantly deteriorates the extinction ratio of the receiver incident light. This accumulated low level light results in a poor signal to noise ratio. While none of the individual transmitters produce sufficient light to affect the receiver, the collective low level light from all of the transmitters is significant enough to raise the aggregate low level.

Therefore, the laser diode should be completely shut down when it is not transmitting data. The signal that controls this shut down is called the enable signal and is delivered before the actual data signal is delivered. It should be appreciated that to obtain high communication efficiency, quick response to the enable signal is required to reduce the communication overhead. For example, if the enable response of the laser diode is slow, the initial portion of the data in a data stream may not be accurately converted to an optical signal and, therefore, a large overhead time corresponding to the enable response time is required.

Stable operation of a prior art closed loop automatic power control system is achieved by establishing the response characteristics of the closed loop to prevent undesirable unstable operation. This stable operation is achieved by slowing the response speed; however, this slowed response speed also operates to increase response time to the enable signal, thereby resulting in the long enable response times discussed above.

GB-A-2187055 discloses those features set out in the preambles to the independent claims.

The apparatus of the invention overcomes or minimizes the above-identified problems by providing a closed loop control circuit for a laser diode that enhances laser diode response to an enable signal by reducing the response time of the control circuit during the initial portion of the enable time period.

A method and apparatus for controlling the response time of an optical transmitter, according to the present invention, incorporates those features set out in the characterising portions of the independent claims.

Other advantages of the invention will become apparent upon reading the following detailed description and upon reference to the drawing in which:

Fig. 1 is a block diagram of the instant exemplary apparatus;

Figs. 2A-E are graphical representation of the enable and data signals of the instant apparatus;

Fig. 3 is a detailed electrical schematic of the low level detector;

Fig. 4 is an electrical schematic of the integration circuit.

Fig. 5 is an electrical schematic of a low level detector;

Fig. 6 is an electrical schematic of an integration circuit;

Fig. 7 is functional schematic of the instant apparatus; and

Figs. 8A and B are graphical representations of the data signal and the corresponding electrical signal, respectively.

While the invention is susceptible to various modifications and alternative forms, specific embodiments thereof have been shown by way of example in the drawing and are herein described in detail. It should be understood, however, that there is no intention to limit the invention to the particular forms disclosed, but on the contrary, the intention is to cover all modifications, equivalents, and alternatives falling within the scope of the invention as defined by the appended claims.

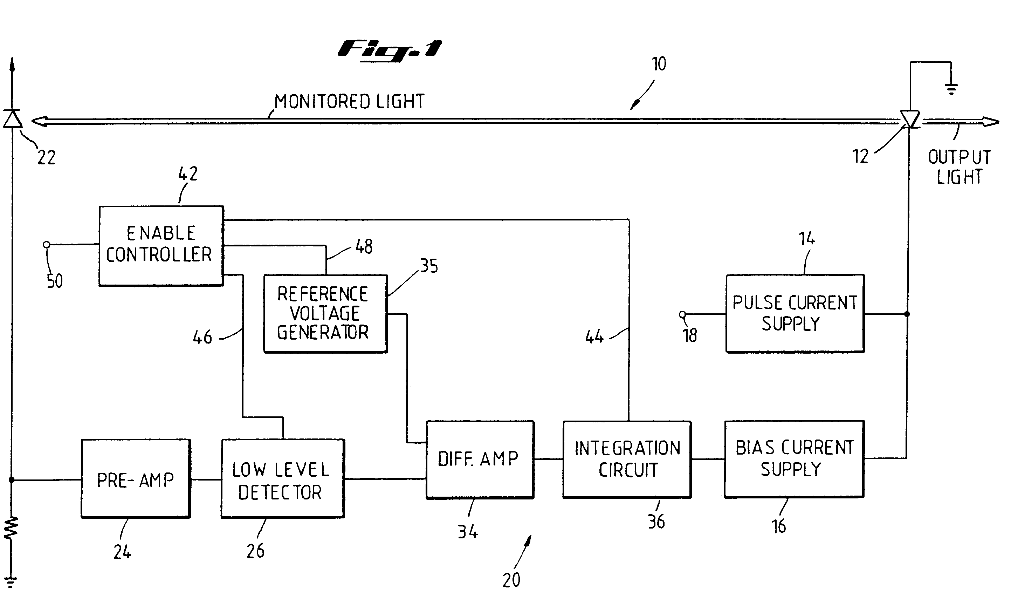

Turning to the drawings and referring to Fig. 1, one embodiment of an apparatus 10 that controls the enable response time of an optical transmitter, such as a laser diode 12, during the reception of a data signal is illustrated. The laser diode 12 is powered by the combined outputs from a pulse and bias current supply 14, 16. The pulse current supply 14 has a data input terminal 18 connected to an external controller (not shown), which provides serial pulses of data. The pulse current supply 14 converts the serial pulses of data to a corresponding series of current pulses that drive the laser diode 12 between corresponding "high" and "low" optical output intensity.

The bias current supply 16 provides a DC offset to the pulse output of the pulse current supply. Further, the apparatus 10 controls the level of the DC offset to maintain the minimum optical output intensity of the laser diode 12 at a preselected desired level.

The apparatus 10 constitutes a closed-loop, bias-current-supply controller 20. The closed-loop, bias-current-supply controller 20 employs a feedback path for monitoring the optical output intensity of the laser diode 12 and controlling the optical output intensity to a preselected level. In order to accomplish stable operation but permit rapid response to an enable signal, the closed-loop, bias-current-supply controller 20 has a first preselected response characteristic for a first preselected period of time in response to receiving the enable signal and a second preselected response characteristic thereafter.

The closed loop feedback path includes a photodiode 22 that receives a portion of the light delivered by the laser diode 12. The photodiode 22 delivers an output that has a magnitude proportional to the intensity of the light delivered by the laser diode 12. A preamplifier 24 receives and amplifies the output from the photodiode 22.

The output of the preamplifier 24 is delivered to an optical low level detector 26. The optical low level detector 26 operates to store the minimum magnitude of the signal delivered by the preamplifier 24. In other words, the optical low level detector 26 detects and stores the trough level of the photodiode output, which corresponds to the minimum optical output intensity of the laser diode 12.

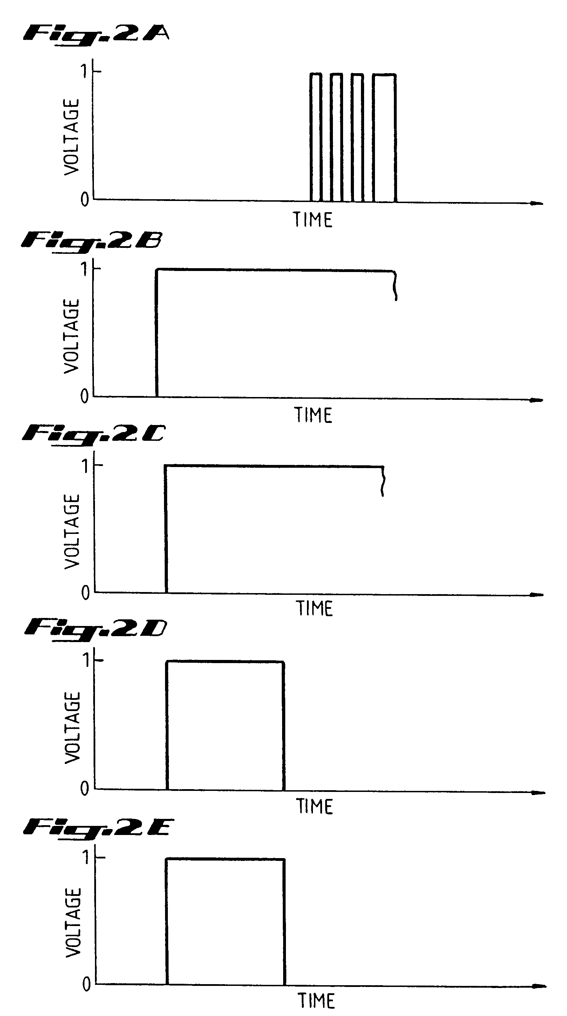

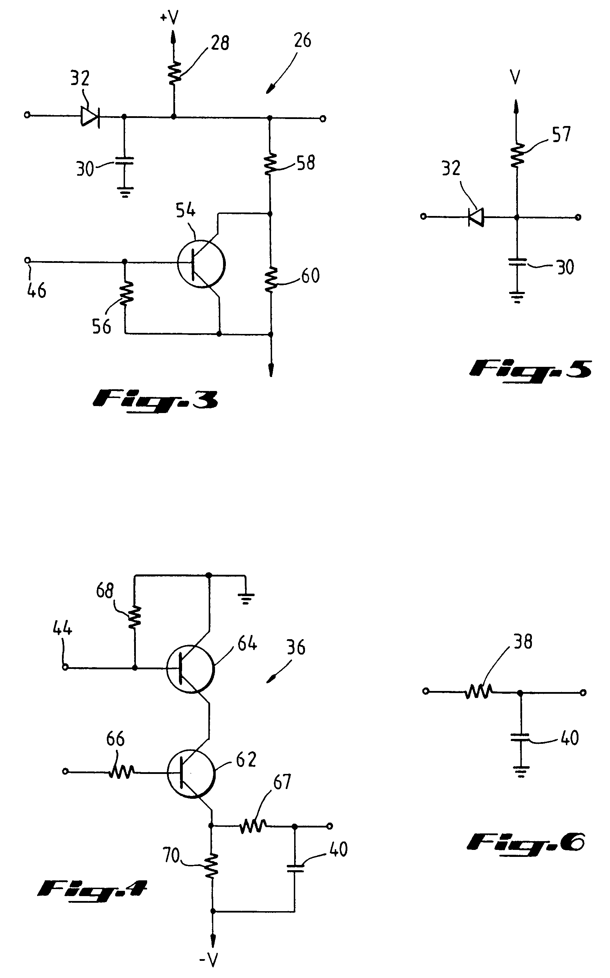

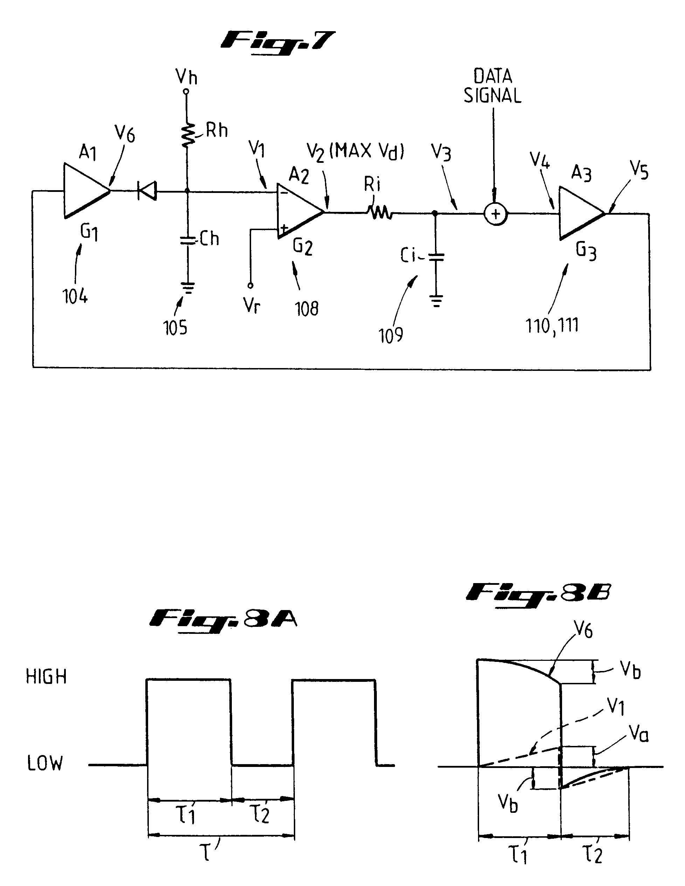

The optical low level detector 26 includes, as exemplary shown in Fig. 5, a resistor 28 connected to a positive source of voltage V and to ground through a storage capacitor 30. A diode 32 has its cathode connected to the preamplifier 24 and its anode connected to the junction of the resistor 28 and capacitor 30. This embodiment of the optical low level detector 26, however, does not include provision for altering the rate of increase of the stored level when the input signal level is higher than the stored signal level (droop rate) of the optical low level detector 26, but its operation is useful in understanding the overall operation of the apparatus 10. An embodiment of a optical low level detector 26 that includes means for altering its droop rate is discussed in greater detail herein in conjunction with Fig. 3.

The arrangement of the optical low level detector 26 shown in Fig. 5 operates so that when the voltage level of the preamplifier output signal falls to a value less than the voltage stored by the capacitor 30, the diode 32 is biased "on" and conducts current to the preamplifier 24, thereby providing a discharge path for the capacitor 30. The capacitor 30 discharges to a value corresponding to the lowest voltage level of the preamplifier output signal. Therefore, it can be seen that the voltage level stored at the capacitor 30 corresponds to the trough voltage level of the photodiode output signal, which corresponds to the minimum optical output intensity of the laser diode 12.

The signal stored in the capacitor 30 is delivered to one input of a differential amplifier 34. The second input to the differential amplifier 34 is connected to a reference voltage generator 35 where the reference voltage represents the preselected desired trough level of the laser diode output signal. The two inputs to the differential amplifier 34 are connected so that an increase in the low level of the optical output intensity of the laser diode 12 causes a decrease in the bias current provided to the laser diode 12.

An integration circuit 36 is connected to the output of the differential amplifier 34 and includes, as exemplary shown in Fig. 6, a resistor 38 and capacitor 40 connected to system ground. This embodiment of the integration circuit 36, however, does not include provision for altering the time constant of the integration circuit 36, but its operation is useful in understanding the overall operation of the apparatus 10. An embodiment of a integration circuit 36 that includes means for altering its time constant is discussed in greater detail herein in conjunction with Fig. 4.

The integration circuit 36 operations to enhance stable operation of the overall circuit. When the optical output intensity of the laser diode 12 is "high," the stored voltage of the optical low level detector 26 increases because the output voltage of the preamplifier 24 is greater than the stored voltage of the optical low level detector 26. Therefore, the bias current provided to the laser diode 12 undesirably decreases and the optical output intensity of the laser diode 12 decreases, as shown in Fig. 8b. The integration circuit 36 operates to reduce this undesirable decrease of the bias current. The output of the integration circuit 36 is connected to drive the bias current supply 16, thereby completing the closed-loop controller 20.

The response speed of this closed loop is determined by the integration time constant of the integration circuit 36 ($C * R$), a maximum (saturated) output of the differential amplifier 34 and the gain ($Gy$) of the loop a shown by the equation (3) later herein. Therefore, the closed loop response characteristics is controlled by changing the time constant of the integration circuit and the droop rate of the low level detector.

The time constant of the integration circuit 36 and the droop rate of the optical low level detector 26 are controlled by an enable controller 42 through control lines 44 and 46, respectively. The enable signal to an enable signal input terminal 50 of the enable controller 42 is provided by an external controller (not shown), such as the same controller that initiates data signals to the pulse current supply 14.

In this implementation, the enable/disable function is realized by controlling the reference voltage output of the reference voltage generator 35. The reference voltage output is controlled by the enable controller 42 through a control line 48. For example, the enable signal to the reference voltage generator 35 operates to decrease the reference voltage to a relatively low magnitude, such as zero. Thus, the differential amplifier 34 ultimately decreases the bias current provided by the bias current supply 16 to zero to match the reference voltage. This, of course, effectively shuts down the laser diode 12.

A better appreciation of the operation of the apparatus 10 is had by reference to the timing diagrams illustrated in Figs. 2A-E. Fig. 2A shows the initial portion of the input data signal delivered to the input terminal as a series of pulses that correspond to the serial data configuration 10101011.

Fig. 2B shows the enable signal provided at the signal input terminal 50 and delivered to the enable controller 42. The enable signal is asserted for a period of time correlative to the duration of the serial data signal of Fig. 2A. Fig. 2C shows the control signal on the control line 48 delivered to the reference voltage generator 35. This control signal is of similar duration as the enable signal to ensure that the desired reference voltage is applied to the differential amplifier 34 throughout the enable time period. In this manner, the reference voltage generator is permitted to generate the reference voltage of a preselected magnitude, corresponding to the desired trough level, to one input of the differential amplifier 34.

Similarly, Figs. 2D and 2E show the control signals on the lines 46 and 44 respectively delivered to the optical low level detector 26 and the integration circuit 36. Unlike the control signal delivered to the reference voltage generator 35, the control signals of Figs. 2D and 2E are of a first and second preselected duration of time, substantially less than the enable time period. Preferably, the above mentioned integration circuit control signal should not be negated while the above-mentioned low level detector control signal is asserted. These limited duration control signals operate to reduce the response time of the overall control loop during the initial portion of the enable time period.

In particular, the low level detector control signal increases the rate at which the optical low level detector 26 permits its stored signal to increase. For example, in the presence of the low level detector control signal, the magnitude of the signal stored by the optical low level detector 26 increases at a first preselected rate, which is substantially greater than the rate at which the stored signal increases in the absence of the low level detector control signal.

Referring to Fig. 3, an electrical schematic of one embodiment of the optical low level detector 26, which includes means for varying the droop rate of the optical low level detector 26, is shown. it should be appreciated that the capacitor 30 and diode 32 are retained from the embodiment illustrated in Fig. 5 with little change. Further, resistor 28 of Fig. 5 corresponds to a pair of resistors 58, 60. The diode 32, however, is illustrated connected in opposite polarity to that shown in Fig. 5.

Thus, the optical low level detector 26 is actually configured as a peak level detector. The intention here is to illustrate that if the preamplifier 24 is an inverting amplifier, then the optical low level detector 26 is configured to detect a peak rather than a trough. When an inverting amplifier is employed, the peak of the output signal corresponds to the minimum optical output intensity rather than the trough of the output signal.

To vary the droop rate of the optical low level detector 26, an NPN bipolar junction transistor 54 has its base connected to the control line 46 and to a voltage supply -V through a resistor 56. The pair of resistors 58, 60 are serially connected between the voltage supply -V and the junction of a pull-up resistor 57 and the capacitor 30. Additionally, the collector and emitter of the transistor 54 are connected across the resistor 60 to effectively bypass the resistor 60 when the transistor 54 is biased "on."

Thus, during the period of time when the control signal on line 46 is "asserted," the transistor 54 is biased "on," thereby reducing the total resistance of the optical low level detector 26 and increasing the droop rate. Subsequently, after the preselected duration of time when the control signal falls to its "negated" value, the transistor 54 is biased "off" and the resistor 60 again forms a portion of the circuit, thereby increasing the overall resistance and reducing the droop rate.

It should be appreciated that the magnitude of the detected low level also changes slightly when the transistor 54 is biased "on" or "off." This slight change is compensated by simultaneously altering the reference voltage produced by the reference voltage generator 35.

Referring to Fig. 4, an electrical schematic of one embodiment of the integration circuit 36, which includes means for varying the time constant of the integration circuit 36, is shown. It should be appreciated that the capacitor 40 is retained from the embodiment illustrated in Fig. 6 with little change.

To vary the response time of the integration circuit 36, an NPN and PNP bipolar junction transistor 62, 64 respectively are added to the embodiment illustrated in Fig. 6. Further, a resistor 66 is connected intermediate the base of the NPN transistor 62 and the output of the differential amplifier 34. The resistor 66 is selectively switchable into the integration circuit 36 to alter the total resistance of the integration circuit 36 and thereby change the time constant.

The PNP transistor 64 has its base connected to the control line 44 of the enable controller 42 and to ground and its own emitter through a resistor 68. The collector of the PNP transistor 64 is connected to the collector of the NPN transistor 62. The emitter of the NPN transistor 62 is connected to a resistor 67, as well as to a source of negative voltage -V through a resistor 70.

When the PNP transistor 64 is biased "off" by a "negated" signal on the control line 44, the NPN transistor 62 operates as a base-emitter diode, thereby connecting the resistor 66 into the integration circuit 36. On the other hand, when the PNP transistor 64 is biased "on" by an "asserted" signal on the control line 44, the NPN transistor 62 operates as an emitter follower. Therefore, the resistor 66 can be neglected and, consequently, the integration time constant significantly decreases. It should be noted that the gain of the integration circuit correspondingly increases with the decreasing time constant.

A better appreciation of the requirements of the optical low level detector 26 and integration circuit 36 are had by reference to the functional circuit diagram shown in Fig. 7 and the timing diagrams of Figs. 8A and B. Fig. 7 is a simplified diagram of the closed loop bias current control circuit of the trough level control type. A1 corresponds to the preamplifier 24. A1 is preferably a linear element. Therefore,

$$0 < G1 \text{ and}$$
$$V6 = G1 * V5$$

are assumed.

A2 corresponds to the differential amplifier 34. A2 is assumed to be a linear but saturating element. Therefore,

$$0 < G2, \text{ and}$$
$$V2 = G2 * (Vr - V1), \text{ if}$$
$$V1 > Vr - Vd/G2 \text{ or}$$
$$V2 = Vd, \text{ if } V1 \leq Vr - Vd/G2.$$

A3 and the current junction 72 preceding it correspond to the bias current supply 16, the pulse current supply 14, the laser diode 12, the photodiode 22, and their coupling efficiency. Therefore, A3 is actually a strongly nonlinear element. However, A3 is assumed to be a linear element here for purposes of simplifying this description. Therefore,

$$0 < G3 \text{ and}$$
$$V5 = G3 * V4$$

are assumed.

First, the stability of the circuit when data signal exists should be considered. Fig 8A shows a representative waveform of the data input. The data signal is preferably a repeating signal that has a period of tau = tau1 + tau2.

Fig. 8B shows the allowed (regarded as stable) response of the circuit. The solid line represents the voltage waveform V6, which is analogous to the optical output intensity. The broken line represents the voltage waveform V1, which is the detected low (trough) level. The increase rate of V1 when V6 > V1 (droop rate of the low level detector) is

$$rd = \frac{Vh}{Ch * Rh} \quad (1).$$

Therefore,

$$Va = rd * tau1 = \frac{Vh * tau1}{Ch * Rh}.$$

Vb is roughly the integration of Gx * rd * time over time.

$$Vb = \frac{Gx * Vh * tau1^2}{2 * Ch * Rh * Ci * Ri}.$$

Where Gx = G1 * G2 * G3. If

$$\frac{Vb}{Va} \leq \frac{tau2}{tau1},$$

then the circuit show the response as shown in the Fig. 8B, and the operation is regarded to be stable. Therefore,

$$Gx * tau1 * \frac{tau1}{tau2} \leq 2 * Ci * Ri \quad (2)$$

is the requirement for the stable operation. If tau1 = tau2 = tau0, equation (2) reduces to

$$Gx * tau0 \leq 2 * Ci * Ri \quad (2').$$

Second, consider the case in which a data signal is not present and the transmitter is under transition from the disable state to the enable state. When the enable signal is asserted and the bias current starts to be provided by the laser diode, the amplifier A2 is considered to be initially saturated. The increase rate of V6 when A2 has saturated, that is, V2 = Vd, is

$$ra = \frac{Vd * Gy}{Ci * Ri} \quad (3).$$

Where Gy = G3 * G1. To obtain the controlled response against the enable signal, ra should not be larger than rd (droop rate).

$$rd \geq ra \quad (4).$$

Therefore,

$$\frac{Vd}{Vh} * Gy * Ch * Rh < Ci * Ri \quad (5)$$

is the requirement to obtain the controlled response against the enable signal.

The last case to consider is the instance of the burst signal input. From the similar calculation,

$$Gx * tau0 < (1 + sqr(3)) * Ci * Ri \quad (6)$$

is deduced to be the requirement to obtain the stable response against the burst data signal. Inequality (6) is automatically satisfied if inequality (2') is satisfied. However, if the system has some overshoot characteristics, inequality (6) should be modified as

$$\frac{Gx^2 * tau0^2}{Ci^2 * Ri^2} + \frac{2 * Gx * Ch * Rh * Vs}{Ci * Ri * Vh} - \frac{2 * Gx * tau0}{Ci * Ri} \leq 2 \quad (7)$$

Where Vs is the overshoot voltage at the output of A1.

## Claims

1. Apparatus for controlling the enable response time of an optical transmitter (12) during the reception of a data signal, wherein the optical transmitter receives current from a pulse and a bias current supply, comprising: first means (50) for delivering an enable signal having a time duration correlative to the data signal; and a closed-loop, bias-current-supply controller (20) having a feedback path for monitoring the optical output intensity of the optical transmitter (12) and delivering and controlling the optical output intensity from substantially zero to a desired value, the closed-loop, bias-current-supply controller being characterised by a first response time for a first period of time in response to receiving the enable signal and a second response time thereafter, the second response time being greater than the first response time.

2. Apparatus for controlling the enable response time of an optical transmitter (12) during the reception of data signal, wherein the optical transmitter receives current from a pulse and a bias current supply, the bias current supply being controlled in a closed loop; first means (50) for delivering an enable signal, having a time duration correlative to the data signal; second means (22,24) for receiving a portion of the optical output of the optical transmitter (12) and delivering a first signal having a magnitude respective of the optical intensity of the optical transmitter optical output; third means (26) for receiving the first signal and the enable signal and storing the magnitude of the first signal; and fourth means (34) for comparing the magnitude of the stored signal to a preselected magnitude and arranged to produce a control signal, the magnitude of the bias current being altered in response to the control signal; the apparatus being characterised by a controller (20) having a feedback path for monitoring the optical output intensity of the optical transmitter (12) and delivering and controlling the optical output intensity from substantially zero to a desired value, the controller (20) having a first response time for a first period of time after receiving the enable signal, and a second response time thereafter, the second response time being greater than the first response time.

3. Apparatus, as claimed in Claim 2, in which the magnitude of the stored first signal in the third means (26) varies at a first rate for a first duration of time in response to receiving the enable signal and at a second rate thereafter.

4. Apparatus as claimed in Claim 2 or Claim 3 including fifth means (36) for integrating the control signal and altering the magnitude of the bias current in response to the magnitude of the integrated control signal, the time constant of the integrating means being a first value for a first duration of time in response to receiving the enable signal and a second value thereafter.

5. Apparatus as claimed in any one of Claims 2 to 4 in which the second means includes a photodiode (22).

6. Apparatus as claimed in any one of Claims 2 to 5 in which the third means (26) includes means for detecting the magnitude of the first signal corresponding to a minimum optical output of the optical transmitter (12) and storing the magnitude corresponding to the minimum optical output of the optical transmitter.

7. Apparatus as claimed in Claim 6 in which the minimum magnitude detecting means includes a resistor (58,60) and capacitor (30) serially connected to a source of electrical power, and a diode (32) adapted to receive the first signal and being connected to the junction of the capacitor and resistor.

8. Apparatus as claimed in Claim 7 in which the minimum magnitude detecting means includes a resistor (58,60) and capacitor (30) serially connected to a source of electrical power, a diode (32) adapted to receive the first signal and being connected to the junction of the capacitor and resistor, and means (54) for altering the capacitance of the capacitor (30) or the resistance of the resistor (58,60) in response to receiving the enable signal.

9. Apparatus as claimed in Claim 8 in which the altering means (54) includes means for connecting a second resistor (60) in series with the resistor (58) and capacitor (30).

10. Apparatus as claimed in Claim 9 in which the altering means comprises a transistor (54) connected in parallel with the second resistor (60) and adapted for being biased on in response to receiving the enable signal, whereby the transistor substantially by-passes the second resistor.

11. Apparatus as claimed in Claim 7 or Claim 8 in which the diode is reverse biased.

12. Apparatus as claimed in Claim 7 or Claim 8 in which the diode is forward biased.

13. Apparatus as claimed in any one of Claims 2 to 12 in which the fourth means (34) includes means for setting the preselected magnitude to zero in the absence of the enable signal.

14. Apparatus as claimed in Claim 4 in any one of the preceding claims when dependent upon Claim 4 in which the fifth means (36) includes a first resistor and capacitor, wherein the resistor is adapted to receive the control signal and is connected to electrical ground through a capacitor (40), and means for altering one of the capacitance of the capacitor and the resistance of the resistor in response to receiving the enable signal.

15. Apparatus as claimed in Claim 14 in which the altering means includes a second resistor (66) and means for connecting the second resistor in series with the first resistor.

16. Apparatus as claimed in Claim 15 in which the means for connecting the second resistor (66) in series with first resistor includes a transistor (62) configured to operate as an emitter follower and a base-emitter diode in response to the enable signal being asserted and negated respectively, whereby the transistor substantially bypasses the second resistor (66).

17. A method of controlling the enable response time of an optical transmitter during the reception of a data signal, wherein the optical transmitter receives current from a pulse and a bias current supply, the bias current supply being controlled in a closed loop to deliver and control the optical output intensity from substantially zero to a desired value, the method comprising: delivering an enable signal having a time duration correlative to the data signal; delivering a first signal having a magnitude representative of the optical intensity of the optical transmitter optical output; storing the magnitude of the first signal; comparing the magnitude of the stored signal to a preselected magnitude and delivering a control signal in dependence thereon; and altering the magnitude of the bias current in response to the control signal; the method being characterised in that the enable response time is controlled to a first value in response to receiving the enable signal and to a second value thereafter, the second response time being greater than the first response time.

18. A method as claimed in Claim 17 in which the magnitude of the stored first signal varies at a first rate for a first duration of time in response to receiving the enable signal and at a second rate thereafter.

19. A method as claimed in Claim 17 or Claim 18 including integrating the control signal and altering the magnitude of the integrated control signal, the rate of change of the integrated signal being a first rate for a first duration of time in response to receiving the enable signal and a second rate thereafter.

**Patentansprüche**

1. Vorrichtung zum Steuern der Freigabereaktionszeit eines optischen Senders (12) während des Empfangs eines Datensignals, wobei der optische Sender Strom von einer Impuls- und einer Vorstromversorgung empfängt, enthaltend: eine erste Einrichtung (50) zum Abgeben eines Freigabesignals mit einer zu dem Datensignal korrellierten Zeitdauer; und einen Vorstromversorgungs-Regler (20) mit geschlossenem Regelkreis, der einem Rückkopplungsweg zur Überwachung der Ausgangslichtstärke des optischen Senders (12) und zum Abgeben und Steuern der Ausgangslichtstärke von im wesentlichen Null auf einen gewünschten Wert aufweist, wobei der Vorstromversorgungs-Regler mit geschlossenem Regelkreis gekennzeichnet ist durch eine erste Reaktionszeit für ein erstes Zeitintervall auf den Empfang des Freigabesignals hin und eine zweite Reaktionszeit danach, wobei die zweite Reaktionszeit größer als die erste Reaktionszeit ist.

2. Vorrichtung zum Steuern der Freigabereaktionszeit eines optischen Senders (12) während des Empfangs eines Datensignals, wobei der optische Sender Strom von einer Impuls- und einer Vorstromversorgung empfängt, wobei die Vorstromversorgung in einem geschlossenen Regelkreis geregelt wird; eine erste Einrichtung (50) zum Abgeben eines Freigabesignals mit einer zu dem Datensignal korrellierten Zeitdauer; eine zweite Einrichtung (22, 24) zum Empfang eines Teils des Ausgangslichtsignals des optischen Senders (12) und zum Abgeben eines ersten Signals mit einer auf die Lichtstärke des Ausgangslichtsignals des optischen Senders bezogenen Größe; eine dritte Einrichtung (26) zum Empfang des ersten Signals und des Freigabesignals und zum Speichern der Größe des ersten Signals; und eine vierte Einrichtung (34), die dazu dient, die Größe des gespeicherten Signals mit einer vorgewählten Größe zu vergleichen und die dafür eingerichtet ist, ein Steuersignal zu erzeugen, wobei die Größe des Vorstroms auf das Steuersignal hin verändert wird; wobei die Vorrichtung gekennzeichnet ist durch einen Regler (20) mit einem Rückkopplungsweg zur Überwachung der Ausgangslichtstärke des optischen Senders (12) und zum Abgeben und Steuern der Ausgangslichtstärke von im wesentlichen Null auf einen gewünschten Wert, wobei der Regler (20) eine erste Reaktionszeit für ein erstes Zeitintervall nach dem Empfang des Freigabesignals und eine zweite Reaktionszeit danach aufweist, wobei die zweite Reaktionszeit größer als die erste Reaktionszeit ist.

3. Vorrichtung nach Anspruch 2, bei der sich die Größe des gespeicherten ersten Signals in der dritten Einrichtung (26) für eine erste Zeitdauer auf den Empfang des Freigabesignals hin mit einer ersten Geschwindigkeit und danach mit einer zweiten Geschwindigkeit verändert.

4. Vorrichtung nach Anspruch 2 oder Anspruch 3, die eine fünfte Einrichtung (36) zum Integrieren des Steuersignals und zum Ändern der Größe des Vorstroms auf die Größe des integrierten Steuersignals hin enthält, wobei die Zeitkonstante der Integriereinrichtung für eine erste Zeitdauer auf den Empfang des Freigabesignals hin ein erster Wert und danach ein zweiter Wert ist.

5. Vorrichtung nach einem der Ansprüche 2 bis 4, bei der die zweite Einrichtung eine Fotodiode (22) enthält.

6. Vorrichtung nach einem der Ansprüche 2 bis 5, bei der die dritte Einrichtung (26) eine Einrichtung zum Detektieren der Größe des ersten Signals, die einem minimalen Ausgangslichtsignal des optischen Senders (12) entspricht, und zum Speichern der Größe enthält, die dem minimalen Ausgangslichtsignal des optischen Senders entspricht.

7. Vorrichtung nach Anspruch 6, bei der die Detektiereinrichtung für die minimale Größe einen Widerstand (58, 60) und einen Kondensator (30), die in Reihe mit einer Quelle für elektrischen Strom verbunden sind, und eine Diode (32) enthält, die dafür eingerichtet ist, das erste Signal zu empfangen, und die mit der Verbindung des Kondensators und des Widerstands verbunden ist.

8. Vorrichtung nach Anspruch 7, bei der die Detektiereinrichtung für die minimale Größe einen Widerstand (58, 60) und einen Kondensator (30), die in Reihe mit einer Quelle für elektrischen Strom verbunden sind, eine Diode (32), die dafür eingerichtet ist, das erste Signal zu empfangen, und die mit der Verbindung des Kondensators und des Widerstands verbunden ist, und eine Einrichtung (54) zum Verändern der Kapazität des Kondensators (30) oder des Widerstands des Widerstands (58, 60) auf den Empfang des Freigabesignals hin enthält.

9. Vorrichtung nach Anspruch 8, bei der die Veränderungseinrichtung (54) eine Einrichtung zum Verbinden eines zweiten Widerstands (60) in Reihe mit dem Widerstand (58) und dem Kondensator (30) enthält.

10. Vorrichtung nach Anspruch 9, bei der die Veränderungseinrichtung einen Transistor (54) enthält, der parallel mit dem zweiten Widerstand (60) verbunden ist und der dafür eingerichtet ist, auf den Empfang des Freigabesignals hin vorgespannt zu werden, wodurch der Transistor den zweiten Widerstand im wesentlichen überbrückt.

11. Vorrichtung nach Anspruch 7 oder Anspruch 8, bei der die Diode rückwärts vorgespannt ist.

12. Vorrichtung nach Anspruch 7 oder Anspruch 8, bei der die Diode vorwärts vorgespannt ist.

13. Vorrichtung nach einem der Ansprüche 2 bis 12, bei der die vierte Einrichtung (34) eine Einrichtung zum Einstellen der vorgewählten Größe auf Null beim Fehlen des Freigabesignals enthält.

14. Vorrichtung nach Anspruch 4 oder einem der vorstehenden Ansprüche, wenn von Anspruch 4 abhängig, bei der die fünfte Einrichtung (36) einen ersten Widerstand und einen Kondensator, wobei der Widerstand dafür eingerichtet ist, das Steuersignal zu empfangen, und über einen Kondensator (40) mit elektrischer Erde verbunden ist, und eine Einrichtung zum Verändern entweder der Kapazität des Kondensators oder des Widerstands des Widerstands auf den Empfang des Freigabesignals hin enthält.

15. Vorrichtung nach Anspruch 14, bei der die Veränderungseinrichtung einen zweiten Widerstand (66) und eine Einrichtung zum Verbinden des zweiten Widerstands in Reihe mit dem ersten Widerstand enthält.

16. Vorrichtung nach Anspruch 15, bei der die Einrichtung zum Verbinden des zweiten Widerstands (66) in Reihe mit dem ersten Widerstand einen Transistor (62), der konfiguriert ist, auf das aktivierte bzw. das negierte Freigabesignal hin als Emitterfolger bzw. als Basis-Emitter-Diode zu arbeiten, wodurch der Transistor den zweiten Widerstand (66) im wesentlichen überbrückt.

17. Verfahren zum Steuern der Freigabereaktionszeit eines optischen Senders während des Empfangs eines Datensignals, wobei der optische Sender Strom von einer Impuls- und einer Vorstromversorgung empfängt, wobei die Vorstromversorgung in einem geschlossenen Regelkreis geregelt wird, um die Ausgangslichtstärke abzugeben und von im wesentlichen Null auf einen gewünschten Wert zu steuern, wobei das Verfahren umfaßt: Abgeben eines Freigabesignals mit einer zu dem Datensignal korrellierten Zeitdauer; Abgeben eines ersten Signals mit einer Größe, die die Lichtstärke des Ausgangslichtsignals des optischen Senders darstellt; Speichern der Größe des ersten Signals; Vergleichen der Größe des gespeicherten Signals mit einer vorgewählten Größe und Abgeben eines Steuersignals in Abhängigkeit davon; und Verändern der Größe des Vorstroms auf das Steuersignal hin; wobei das Verfahren dadurch gekennzeichnet ist, daß die Freigabereaktionszeit auf den Empfang des Freigabesignals hin auf einen ersten Wert gesteuert wird und danach auf einen zweiten Wert gesteuert wird, wobei die zweite Reaktionszeit größer als die erste Reaktionszeit ist.

18. Verfahren nach Anspruch 17, bei dem sich die Größe des gespeicherten ersten Signals für eine erste Zeitdauer auf den Empfang des Freigabesignals hin mit einer ersten Geschwindigkeit und danach mit einer zweiten Geschwindigkeit verändert.

19. Verfahren nach Anspruch 17 oder Anspruch 18, welches umfaßt, das Steuersignal zu integrieren und die Größe des integrierten Steuersignals zu verändern, wobei die Änderungsgeschwindigkeit des integrierten Signals für eine erste Zeitdauer auf den Empfang des Freigabesignals hin eine erste Geschwindigkeit und danach eine zweite Geschwindigkeit ist.

**Revendications**

1. Appareil pour commander le temps de réponse de validation d'un émetteur optique (12) pendant la réception d'un signal de données, dans lequel l'émetteur optique reçoit un courant à partir d'une alimentation en courant impulsionnel et d'une alimentation en courant de polarisation, comprenant : un premier moyen (50) destiné à délivrer un signal de validation ayant une durée en corrélation avec le signal de données; et un organe de commande d'alimentation en courant de polarisation (20), en boucle fermée, comportant un trajet de rétroaction pour contrôler l'intensité de la sortie optique de l'émetteur optique (12) et pour délivrer et régler l'intensité de la sortie optique sur une valeur allant d'une valeur sensiblement nulle à une valeur souhaitée, l'organe de commande d'alimentation en courant de polarisation, en boucle fermée, étant caractérisé par un premier temps de réponse pendant une première période de temps, en réponse à la réception du signal de validation, et par un second temps de réponse ensuite, le second temps de réponse étant supérieur au premier temps de réponse.

2. Appareil pour commander le temps de réponse de validation d'un émetteur optique (12) pendant la réception d'un signal de données, dans lequel l'émetteur optique reçoit un courant à partir d'une alimentation en courant impulsionnel et d'une alimentation en courant de polarisation, l'alimentation en courant de polarisation étant commandée en boucle fermée; comprenant un premier moyen (50) destiné à délivrer un signal de validation ayant une durée en corrélation avec le signal de données; un second moyen (22, 24) destiné à recevoir une partie de la sortie optique de l'émetteur optique (12) et à délivrer un premier signal ayant une amplitude en relation avec l'intensité optique de la sortie optique de l'émetteur optique; un troisième moyen (26) destiné à recevoir le premier signal et le signal de validation et à mémoriser l'amplitude du premier signal; et un quatrième moyen (34) destiné à comparer l'amplitude du signal mémorisé avec une amplitude présélectionnée et conçu pour générer un signal de commande, l'amplitude du courant de polarisation étant changée en réponse au signal de commande; l'appareil étant caractérisé par un organe de commande (20) comportant un trajet de rétroaction pour contrôler l'intensité de la sortie optique de l'émetteur optique (12) et pour délivrer et régler l'intensité de la sortie optique sur une valeur allant d'une valeur sensiblement nulle à une valeur souhaitée, l'organe de commande (20) ayant un premier temps de réponse pendant une première période de temps après réception du signal de validation, et un second temps de réponse ensuite, le second temps de réponse étant supérieur au premier temps de réponse.

3. Appareil tel que défini dans la revendication 2, dans lequel l'amplitude du premier signal mémorisé dans le troisième moyen (26) varie à un premier taux pendant une première période de temps en réponse à la réception du signal de validation, et à un second taux ensuite.

4. Appareil tel que défini dans la revendication 2 ou la revendication 3, comprenant un cinquième moyen (36) destiné à intégrer le signal de commande et à changer l'amplitude du courant de polarisation en réponse à l'amplitude du signal de commande intégré, la constante de temps du moyen d'intégration ayant une première valeur pendant une première période de temps en réponse à la réception du signal de validation, et une seconde valeur ensuite.

5. Appareil tel que défini dans l'une quelconque des revendications 2 à 4, dans lequel le second moyen comprend une photodiode (22).

6. Appareil tel que défini dans l'une quelconque des revendications 2 à 5, dans lequel le troisième moyen (26) comprend un moyen destiné à détecter l'amplitude du premier signal correspondant à une sortie optique minimale de l'émetteur optique (12) et à mémoriser l'amplitude correspondant à la sortie optique minimale de l'émetteur optique.

7. Appareil tel que défini dans la revendication 6, dans lequel le moyen détecteur d'amplitude minimale comprend une résistance (58, 60) et un condensateur (30) reliés en série à une source d'énergie électrique, ainsi qu'une diode (32) adaptée pour recevoir le premier signal et reliée à la jonction du condensateur et de la résistance.

8. Appareil tel que défini dans la revendication 7, dans lequel le moyen détecteur d'amplitude minimale comprend une résistance (58, 60) et un condensateur (30) reliés en série à une source d'énergie électrique, ainsi qu'une diode (32) adaptée pour recevoir le premier signal et reliée à la jonction du condensateur et de la résistance, et un moyen (54) destiné à changer la capacitance du condensateur (30) ou la valeur ohmique de la résistance (58, 60) en réponse à la réception du signal de validation.

9. Appareil tel que défini dans la revendication 8, dans lequel le moyen de changement (54) comprend un moyen destiné à monter une seconde résistance (60) en série avec la résistance (58) et le condensateur (30).

10. Appareil tel que défini dans la revendication 9, dans lequel le moyen de changement comprend un transistor (54) monté en parallèle avec la seconde résistance (60) et adapté pour être débloqué en réponse à la réception du signal de validation, pour qu'ainsi le transistor court-circuite sensiblement la seconde résistance.

11. Appareil tel que défini dans la revendication 7 ou la revendication 8, dans lequel la diode est polarisée en sens inverse.

12. Appareil tel que défini dans la revendication 7 ou la revendication 8, dans lequel la diode est polarisée en sens direct.

13. Appareil tel que défini dans l'une quelconque des revendications 2 à 12, dans lequel le quatrième moyen (34) comprend un moyen pour régler l'amplitude présélectionnée sur zéro en l'absence du signal de validation.

14. Appareil tel que défini dans la revendication 4 ou dans l'une quelconque des revendications précédentes lorsqu'elles sont dépendantes de la revendication 4, dans lequel le cinquième moyen (36) comprend une première résistance et un premier condensateur, la résistance étant adaptée pour recevoir le signal de commande et étant reliée à une masse électrique par l'intermédiaire d'un condensateur (40), et un moyen destiné à changer l'une de la capacitance du condensateur et de la valeur ohmique de la résistance en réponse à la réception du signal de validation.

15. Appareil tel que défini dans la revendication 14, dans lequel le moyen de changement comprend une seconde résistance (66) et un moyen pour monter la seconde résistance en série avec la première résistance.

16. Appareil tel que défini dans la revendication 15, dans lequel le moyen destiné à monter la seconde résistance (66) en série avec la première résistance comprend un transistor (62) configuré pour agir à la manière d'un émetteur-suiveur et d'une diode base-émetteur en réponse respectivement à l'activation ou à l'inversion du signal de validation, pour qu'ainsi le transistor court-circuite sensiblement la seconde résistance (66).

17. Procédé de commande du temps de réponse de validation d'un émetteur optique pendant la réception d'un signal de données, selon lequel l'émetteur optique reçoit un courant à partir d'une alimentation en courant impulsionnel et d'une alimentation en courant de polarisation, l'alimentation en courant de polarisation étant commandée en boucle fermée pour délivrer et régler l'intensité d'une sortie optique sur une valeur allant d'une valeur sensiblement nulle à une valeur souhaitée, le procédé comprenant : la délivrance d'un signal de validation ayant une durée en corrélation avec le signal de données; la délivrance d'un premier signal ayant une amplitude représentative de l'intensité optique de la sortie optique de l'émetteur optique; la mémorisation de l'amplitude du premier signal; la comparaison de l'amplitude du signal mémorisé avec une amplitude présélectionnée et la délivrance d'un signal de commande en fonction de celle-ci; et le changement de l'amplitude du courant de polarisation en réponse au signal de commande; le procédé étant caractérisé en ce que le temps de réponse de validation est réglé sur une première valeur en réponse à la réception du signal de validation, et sur une seconde valeur ensuite, le second temps de réponse étant supérieur au premier temps de réponse.

18. Procédé tel que défini dans la revendication 17, selon lequel l'amplitude du premier signal mémorisé varie à un premier taux pendant une première période de temps en réponse à la réception du signal de validation, et à un second taux ensuite.

19. Procédé tel que défini dans la revendication 17 ou la revendication 18, comprenant l'intégration du signal de commande et le changement de l'amplitude du signal de commande intégré, le taux de variation du signal intégré ayant une première valeur pendant une première période de temps en réponse à la réception du signal de validation, et une seconde valeur ensuite.

Fig.1

MONITORED LIGHT

OUTPUT LIGHT

ENABLE CONTROLLER

REFERENCE VOLTAGE GENERATOR

PULSE CURRENT SUPPLY

PRE-AMP

LOW LEVEL DETECTOR

DIFF. AMP

INTEGRATION CIRCUIT

BIAS CURRENT SUPPLY

EP 0 387 990 B1

Fig.2A

Fig.2B

Fig.2C

Fig.2D

Fig.2E

+V

32  28  26

30

58

54

46

56  60

**Fig.3**

V

32  57

30

**Fig.5**

68

44  64  36

66

62

67

70  40

-V

**Fig.4**

38

40

**Fig.6**

14

# Fig.7

# Fig.8A

# Fig.8B